# FASCICULE DE BREVET EUROPEEN

(11) **EP 2 421 668 B1**
(45) Date de publication et mention de la délivrance du brevet: **23.11.2016**
(21) Numéro de dépôt: 10714270.5
(22) Date de dépôt: 16.04.2010
(51) Int. Cl.: B22F 7/06, B23P 15/00, F01D 5/02, B22F 5/00

(54) **PROCEDE DE FABRICATION D'UN ENSEMBLE COMPRENANT UNE PLURALITE D'AUBES MONTEES DANS UNE PLATEFORME**
VERFAHREN ZUR HERSTELLUNG EINER MEHRERE IN EINER PLATTFORM ANGEBRACHTE SCHAUFELN ENTHALTENDEN ANORDNUNG
METHOD FOR MANUFACTURING AN ASSEMBLY INCLUDING A PLURALITY OF BLADES MOUNTED IN A PLATFORM

(30) Priorité: 24.04.2009 FR 0952707
(43) Date de publication de la demande: 29.02.2012
(73) Titulaire: Safran Aircraft Engines, 75015 Paris (FR)
(72) Inventeur: BENARD, Jean-Paul, F-77250 Veneux Les Sablons (FR); MENGELING, Vanessa, F-91300 Massy (FR); MOTTIN, Jean-Baptiste, F-75013 Paris (FR)
(74) Mandataire: Gevers & Orès
(86) Numéro de dépôt international: PCT/EP2010/055040
(87) Numéro de publication internationale: WO 2010/121966

(56) Documents cités:
- DE-A1- 2 362 469
- FR-A1- 2 317 502
- US-A- 4 323 394
- US-A- 4 526 747
- US-A1- 2007 102 572

## Description

L'invention concerne la fabrication d'un secteur de roue aubagée d'une turbomachine, en particulier, un secteur de roue aubagée fixe.

Par la suite, un secteur de roue aubagée fixe est dénommé redresseur lorsqu'il appartient au compresseur de la turbomachine et distributeur lorsqu'il appartient à la turbine de la turbomachine.

Un redresseur ou distributeur est formé de secteurs angulaires comprenant chacun une pluralité d'aubes maintenues entre deux plateformes. Par exemple, pour une turbomachine à flux axial, les aubes sont maintenues entre une plateforme radialement extérieure, dite secteur de plateforme extérieure, et une plateforme radialement intérieure, dite secteur de plateforme intérieur.

Dans un mode de fabrication d'une roue aubagée fixe, un secteur de redresseur ou de distributeur est formé selon un procédé de fonderie dit « à cire perdue », dans lequel :
- on réalise d'abord un modèle en cire (ou autre matériau équivalent) du secteur de redresseur ;
- on confectionne, autour de ce modèle, un moule par trempage dans une barbotine pour former une couche de matière au contact de sa surface ;
- on sable la surface de cette couche et on la sèche ;
- on répète ensuite cette opération de trempage dans des barbotines de compositions éventuellement différentes pour former une carapace constituée d'une pluralité de couches ;
- on procède ensuite au décirage du moule carapace, qui est une opération par laquelle on élimine le modèle d'origine ;
- on coule le métal en fusion dans le moule qui se solidifie ;
- on casse la carapace et on parachève la fabrication du secteur de redresseur.

Au cours de la fabrication d'un secteur de redresseur par un procédé de fonderie à cire perdue, il est nécessaire d'usiner puis de polir les secteurs de plateforme et les aubes afin de corriger les défauts de fabrication ce qui engendre un coût. En général, il est nécessaire de corriger par usinage la liaison entre les aubes et les secteurs de plateforme ce qui est complexe en raison de la proximité des aubes les unes par rapport aux autres, la manipulation de l'outil d'usinage étant difficile.

Outre les inconvénients cités précédemment, un procédé de fonderie à cire perdue est de mise en oeuvre coûteuse en raison des multiples étapes que le procédé comporte et du matériel nécessaire à sa mise en oeuvre.

Selon un autre mode de fabrication, on forme les secteurs de plateforme et les aubes de manière indépendante puis on les relie par brasage. Ce procédé, connu de l'homme du métier sous la désignation d'assemblage « mécano-brasé », est un processus long et complexe à mettre en oeuvre.

Une solution éventuelle serait de recourir à un procédé de fabrication par moulage par injection de poudre métallique, connu sous le sigle MIM, qui présente de nombreux avantages en termes de propriétés mécaniques comparables aux avantages que l'on peut retirer des procédés de forgeage. En outre, les coûts de réalisation en série de pièces métalliques par un procédé MIM sont moindres en comparaison à un procédé de fonderie à cire perdue.

Pour rappel, un procédé MIM de fabrication d'une pièce métallique comprend classiquement :
- la préparation d'un mélange de particules métalliques et de liant thermoplastique ;
- le moulage du mélange dans un moule pour obtenir une ébauche crue de la pièce à former, l'ébauche ayant des dimensions supérieures aux dimensions finales de la pièce métallique ;
- un déliantage dont le but est d'enlever le liant de l'ébauche, l'ébauche étant alors poreuse, et
- un frittage de l'ébauche déliantée afin de densifier l'ébauche ce qui entraîne un rétreint de l'ébauche, la pièce ainsi formée ayant alors ses dimensions finales.

La technique de fabrication MIM est utilisée communément pour la fabrication de pièces de relativement petites dimensions. On a aussi proposé de mettre en oeuvre ce procédé pour fabriquer des aubes et des plateformes indépendamment les unes des autres comme décrit dans la demande de brevet publiée US 2007/0102572 A1. Le procédé de fabrication doit être complété par une étape d'assemblage, de préférence par brasage, ce qui allonge la durée de fabrication.

Une solution serait de fabriquer au moyen de la technique MIM le secteur de roue aubagée en une seule opération. Cependant, le procédé MIM n'est pas adapté pour la fabrication de pièces métalliques de grandes dimensions.

Afin d'éliminer au moins certains de ces inconvénients, l'invention concerne un procédé de fabrication d'un ensemble comprenant une pluralité d'aubes montées dans une plateforme, procédé dans lequel :
- on fabrique les aubes séparément de la plateforme, les aubes après fabrication étant finies ;
- on prépare une ébauche de plateforme formée au moins de poudre métallique ;
- on associe les aubes finies à l'ébauche de plateforme par frittage de la poudre métallique.

Le procédé de fabrication selon l'invention tire partie des avantages de la technique de fabrication MIM tout en corrigeant ses défauts. En effet, au cours du procédé de fabrication MIM de la plateforme, alors que cette dernière est encore une ébauche - elle n'a pas encore été densifiée par frittage -, on met en place les aubes finies dans la plateforme, à la manière d'inserts, ce qui permet de positionner de manière précise les aubes par rapport à la plateforme dans leur position finale d'utilisation. Cette étape de positionnement est d'autant plus simple que l'ébauche de plateforme ne possède pas encore ses dimensions finales, et peut être travaillée sans effort.

Selon un premier mode de mise en oeuvre de l'invention, on prépare un mélange de poudre métallique et de liant thermoplastique, on prépare un moule destiné à recevoir le mélange de poudre métallique et de liant thermoplastique et on met en place les aubes finies sur le moule, une extrémité des aubes étant disposée dans le moule. On injecte le mélange dans le moule pour obtenir une ébauche de la plateforme, le mélange surmoulant lesdites extrémités des aubes finies dans le moule afin d'assembler l'ensemble. Après une opération de déliantage, on fritte l'assemblage de l'ébauche de plateforme avec les aubes finie pour associer l'ensemble.

L'opération de frittage commune à la plateforme et aux aubes permet de rigidifier les éléments de l'ensemble dans leur position finale, le rétreint de l'ébauche de plateforme favorisant la liaison avec les aubes.

Dans ce mode de mise en oeuvre, les aubes finies sont mises en place préalablement à l'injection du mélange dans le moule ce qui garantit un positionnement précis des aubes par rapport à la plateforme.

Selon un deuxième mode de mise en oeuvre de l'invention, on prépare un mélange de poudre métallique et de liant thermoplastique, on injecte le mélange dans un moule pour obtenir une ébauche de plateforme et on insère une extrémité des aubes finies dans un logement ménagé dans l'ébauche de plateforme afin d'assembler l'ensemble. On fritte l'assemblage de l'ébauche de plateforme avec les aubes finies pour associer l'ensemble.

Selon une première alternative, on réalise l'opération de déliantage de l'ébauche de plateforme préalablement à l'assemblage des aubes finies avec ladite ébauche. Cela permet avantageusement de limiter le risque de pollution des aubes par le liant qui s'évacue de l'ébauche au cours de l'opération de déliantage.

Ainsi, l'invention concerne plus particulièrement un procédé de fabrication d'un ensemble comprenant une pluralité d'aubes montées dans une plateforme procédé dans lequel :
- on fabrique les aubes séparément de la plateforme, les aubes après fabrication étant finies ;
- on prépare un mélange de poudre métallique et de liant thermoplastique ;
- on injecte le mélange dans un moule pour obtenir une ébauche de plateforme;
- on réalise une opération de déliantage de l'ébauche de plateforme préalablement à l'assemblage des aubes finies avec ladite ébauche ;
- on insère une extrémité des aubes finies dans un logement ménagé dans l'ébauche de plateforme afin d'assembler l'ensemble; et
- on fritte l'assemblage de l'ébauche de plateforme avec les aubes finies pour associer l'ensemble.

Selon une deuxième alternative, on réalise l'opération de déliantage de l'ébauche de plateforme postérieurement à l'assemblage des aubes finies avec ladite ébauche.

De manière avantageuse, l'ensemble comprenant une pluralité d'aubes finies dont les extrémités sont montées entre une plateforme intérieure et une plateforme extérieure, on associe les extrémités des aubes finies avec les ébauches de plateforme par frittage de la poudre métallique.

Un tel procédé permet avantageusement de former des secteurs d'une roue aubagée dont les aubes sont positionnées de manière précise et pérenne entre les plateformes.

L'invention sera mieux comprise en référence au dessin annexé sur lequel :
- la figure 1 représente un diagramme des étapes d'une premier mode de mise en oeuvre du procédé de fabrication selon l'invention ;
- la figure 2 représente un diagramme des étapes d'un deuxième mode de mise en oeuvre du procédé de fabrication selon l'invention et
- la figure 3 représente un diagramme des étapes d'un troisième mode de mise en oeuvre du procédé de fabrication selon l'invention.

Une roue aubagée fixe, par exemple un redresseur d'un étage de compresseur d'un turboréacteur, est formée, de manière classique, d'une pluralité d'aubes maintenues entre une plateforme extérieure annulaire et une plateforme intérieure annulaire. La roue de redresseur est divisée en secteurs angulaires qui sont fabriqués indépendamment puis reliés les uns aux autres pour former la roue de redresseur après montage dans l'étage de compresseur du turboréacteur.

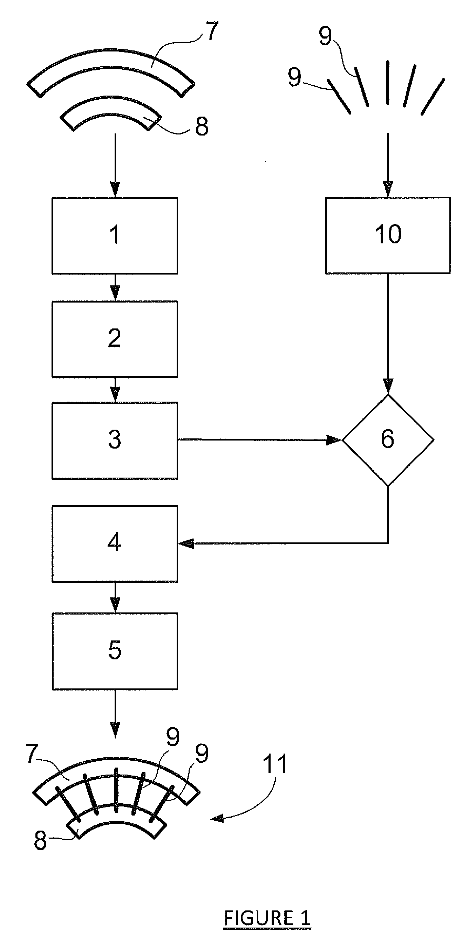

En référence à la figure 1, chaque secteur de redresseur 11 comporte une pluralité d'aubes 9 dont l'extrémité radialement intérieure est fixée à une portion de plateforme intérieure annulaire 8, dite secteur de plateforme intérieure 8, et dont l'extrémité radialement extérieure est fixée à une portion de plateforme extérieure annulaire 7, dite secteur de plateforme extérieure 7.

Toujours en référence à la figure 1, selon un premier mode de mise en oeuvre du procédé de fabrication selon l'invention, les secteurs de plateforme 7, 8 sont réalisés selon un procédé de moulage par injection de métal (MIM) dans lequel on prépare un mélange homogène à partir de fines poudres d'alliage métallique (Nickel, alliage de Titane) et de liant thermoplastique. Le mélange est chauffé à une température suffisante pour faire fondre le liant et permettre l'enrobage des particules de métal par le liant (étape 1 de la figure 1). Ce dernier peut être composé de tout polymère approprié pour cette utilisation, tel que par exemple de polyéthylène, polyéthylène Glycol, polymétlrylméthacrylate ou propylène.

Après avoir été chauffé à une température convenable, le mélange est de consistance fluide à pâteuse. Il est maintenu à cette température et introduit par injection à une pression déterminée dans un moule dont l'empreinte correspond à la forme de la pièce à fabriquer (étape 2 de la figure 1). Dans cet exemple, chaque secteur de plateforme 7, 8 possède son propre moule avec son empreinte. En particulier, chaque empreinte se présente sous la forme d'une cavité parallélépipède incurvée selon sa longueur, des inserts étant disposés dans la cavité pour former des logements dans la plateforme destinés à recevoir une extrémité des aubes 9.

Il va de soi que la géométrie de la liaison plateforme-aube peut avoir différentes formes (lamage dans les plateformes, rainure dans les plateformes, etc.)

Il est à noter que la forme de l'empreinte tient compte des déformations que subit le secteur de plateforme pendant les étapes qui suivent du procédé, notamment le frittage. Les paramètres rhéologiques et de pression d'injection sont choisis de manière à ce que la cavité de moulage soit convenablement remplie par le mélange. Pour chaque moule, on obtient une ébauche dite « crue » que l'on extrait du moule après refroidissement et solidification du liant thermoplastique (étape 3 de la figure 1).

Le procédé de fabrication des secteurs de plateforme par moulage par injection de métal est interrompu afin de procéder à l'étape d'assemblage du secteur de redresseur 11.

Les aubes du secteur de redresseur sont, pour leur part, formées de manière distincte (étape 10 de la figure 1) par un procédé classique (forgeage ou fonderie à la cire perdue par exemple) ou par procédé de moulage par injection de métal complet dans lequel les aubes, après avoir été extraites de leur moule d'injection, subissent une opération de frittage permettant de les consolider avec densification de leur structure. Il va de soi que les aubes peuvent être fabriquées par un procédé d'enlèvement de matière, de prototypage rapide ou de matriçage.

Le procédé de fabrication des aubes ne fait pas partie de l'invention, l'important étant que les aubes soient préfabriquées et finies. Des aubes finies s'opposent principalement à des ébauches d'aubes crues que l'on aurait extraites des moules d'injection MIM directement après refroidissement et solidification du liant thermoplastique, sans avoir subi d'opération de frittage.

Les aubes ainsi formées peuvent être pleines ou comprendre des canaux de ventilation d'air ou de passage d'instrumentations.

Toujours en référence à la figure 1, dans l'étape 6, les aubes finies 9, issues de l'étape de fabrication 10, sont associées aux ébauches de plateforme 7, 8, issues de l'étape de fabrication 3. Les aubes 9 sont positionnées entre les plateformes 7, 8 de manière précise, l'extrémité des aubes 9 étant introduites dans les logements ménagés dans lesdites plateformes 7, 8. En effet, les secteurs de plateforme 7, 8 n'ayant pas encore leurs dimensions finales, contrairement aux aubes 9, il est possible d'adapter la forme des plateformes 7, 8 afin que les aubes 9 soient positionnées précisément. Les aubes 9 remplissent en outre un rôle d'insert dans les plateformes 7, 8, permettant, d'une part, de positionner les plateformes précisément l'une par rapport à l'autre, d'autre part, de former une liaison étanche entre les plateformes 7, 8 et les aubes 9 lors de l'insertion des extrémités des aubes finies 9 dans les plateformes crues 7, 8.

L'ensemble, formé par les secteurs de plateforme 7, 8 reliés par leurs aubes 9, est ensuite soumis à une opération de déliantage (étape 4 de la figure 1) dont le but est d'extraire, dans un premier temps, au moins une partie des composants du liant des ébauches des plateformes 7, 8 sans déformer ces dernières. L'opération de déliantage est de manière avantageuse indifférente pour les aubes finies 9, les aubes 9 remplissant une fonction de maintien des plateformes 7, 8 au cours de l'opération de déliantage.

L'élimination d'une partie du liant conduit à l'obtention d'une structure poreuse formée des particules de métal liées par le liant résiduel. La structure poreuse permet à la fois l'évacuation des résidus de liant et l'équilibrage des pressions internes garantissant la stabilité de la forme de l'ébauche des secteurs des plateformes 7, 8. Le déliantage, selon les matériaux utilisés pour le liant, peut être chimique, avec emploi de solvants appropriés, ou thermique. Le reste du liant est éliminé dans un second temps qui est généralement combiné à l'opération de frittage qui suit, pour éviter toute contrainte susceptible d'en affecter la cohésion. Pour cette raison, ce second temps est généralement effectué par voie thermique.

L'ensemble est ensuite soumis à une opération de frittage (étape 5 de la figure 1) dans laquelle l'ensemble est chauffé dans un four jusqu'à une température proche mais inférieure à la température de fusion du matériau métallique.

La température, la durée du traitement et l'atmosphère dans le four sont contrôlées de manière à ce que les particules métalliques se lient entre elles par diffusion. Les pores de la structure sont réduits progressivement et l'ensemble se densifie pendant cette étape. La densification conduit généralement à un retreint de la pièce qui peut être de l'ordre de 10 à 20%. La valeur du rétreint dépend du taux de vide initial avant frittage et du rapport entre le volume de matériau métallique et celui de liant dans les secteurs de plateforme poreux 7, 8. Elle dépend aussi du taux de densification opéré.

Comme les aubes 9 possèdent une structure dense préalablement à l'opération de frittage, une nouvelle opération de frittage est indifférente pour les aubes 9, la densité des aubes 9 n'augmentant pas. Le rétreint des secteurs de plateforme 7, 8 est guidé par les aubes 9 afin que ces derniers soient dans leur position finale d'utilisation à la fin de l'opération de frittage. Le rétreint des secteurs de plateforme 7, 8 autour des extrémités des aubes finies 9 permet avantageusement de lier fixement les aubes 9 aux secteurs de plateforme 7, 8 et ce de manière étanche. Les extrémités des aubes 9 insérées dans le corps des plateformes 7, 8 se lient structurellement sous l'effet du frittage.

Afin d'améliorer la liaison entre les aubes et les plateformes, il est possible d'effectuer un dépôt sur les aubes et/ou plateformes favorisant la diffusion des 2 parties à assembler. Dans le cas d'aubes en alliage de Nickel, tel que l'Inconel 718, ce dépôt peut être une couche de Nickel.

De préférence, on paramètre l'opération de frittage des plateformes 7, 8 de manière à ce que les plateformes 7, 8 et les aubes 9 aient la même densité à la fin de l'opération de frittage. On forme ainsi un secteur de redresseur 11 de densité homogène et comprenant des aubes radiales 9 dont les extrémités sont liées de manière interne aux secteurs de plateforme 7, 8, la liaison ainsi formée ne nécessitant pas d'opérations de retouche supplémentaires.

Le secteur de redresseur 11 issu du frittage peut être utilisé tel quel ou bien soumis à d'autres traitements en fonction de l'application visée. Le secteur de redresseur 11 peut par exemple être soumis à un traitement de compression isostatique à chaud, connu sous le sigle CIC, qui conduira généralement à une augmentation de la densité du secteur 11. Le taux atteint peut être de 100%. Pendant ce traitement, la pièce est soumise à une température comprise entre 800 et 1200°C associée à une pression allant jusqu'à 150 ATM.

La technique MIM présente de nombreux avantages en termes de propriétés mécaniques qui sont comparables à celles des produits issus de fonderie, le coût de mise en oeuvre du procédé MIM étant moindre.

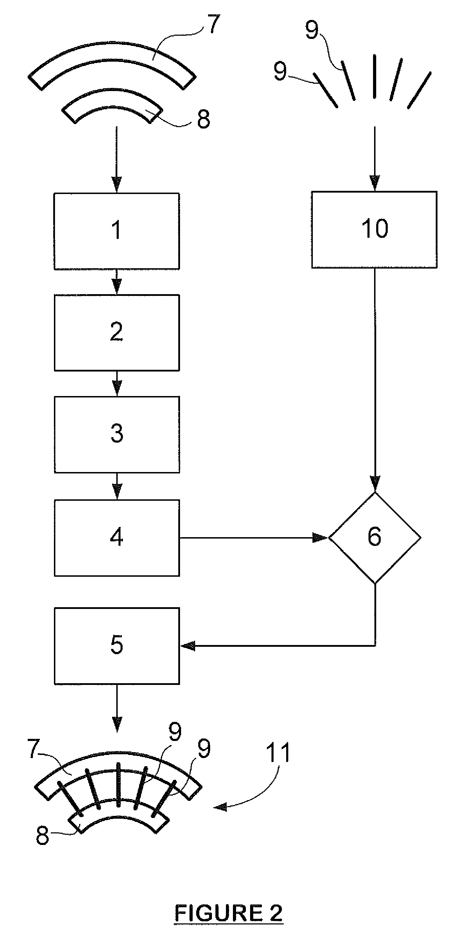

Un deuxième mode de mise en oeuvre de l'invention est décrit en référence à la figure 2. Les références utilisées pour décrire les étapes de la figure 2 sont les mêmes que celles déjà utilisées pour décrire les étapes de la figure 1, pour simplifier la description. D'ailleurs, l'ensemble de la description du mode de mise en oeuvre de la figure 1 n'est pas reprise, cette description s'appliquant aux éléments de la figure 2 lorsqu'il n'y a pas d'incompatibilité. Seules les différences notables, structurelles et fonctionnelles, sont décrites.

En référence à la figure 2, dans le deuxième mode de mise en oeuvre de l'invention, les aubes 9, issue de l'étape de fabrication 10, sont associées aux secteurs de plateforme 7, 8 postérieurement à une opération de déliantage des plateformes crues 7, 8.

En effet, après l'opération de déliantage, les secteurs de plateforme 7, 8 n'ont pas encore leurs dimensions finales, contrairement aux aubes 9, et il est toujours possible d'adapter la forme des secteurs de plateforme 7, 8 afin que les aubes 9 soient positionnées précisément par rapport à ceux-ci.

L'assemblage des aubes finies 9 avec les secteurs de plateforme 7, 8 déliantés permet avantageusement de limiter le risque de pollution des aubes finies 9 au cours de l'opération de déliantage pendant laquelle les résidus de liant sont évacués de la structure poreuse des secteurs de plateforme 7, 8. En effet, lorsque l'opération de déliantage est mise en oeuvre alors que les plateformes 7, 8 sont liées aux aubes 9, les résidus de liant des plateformes 7, 8 sont susceptibles de polluer les aubes 9, ces dernières devant alors être nettoyées. Une fois les aubes finies 9 assemblées avec les ébauches poreuses 7, 8, l'ensemble est fritté pour parachever l'association des aubes 9 avec les platefonnes 7, 8.

Le deuxième mode de mise en oeuvre de l'invention permet avantageusement de s'affranchir du risque de pollution des aubes finies 9 tout en conservant les avantages du premier mode de mise en oeuvre.

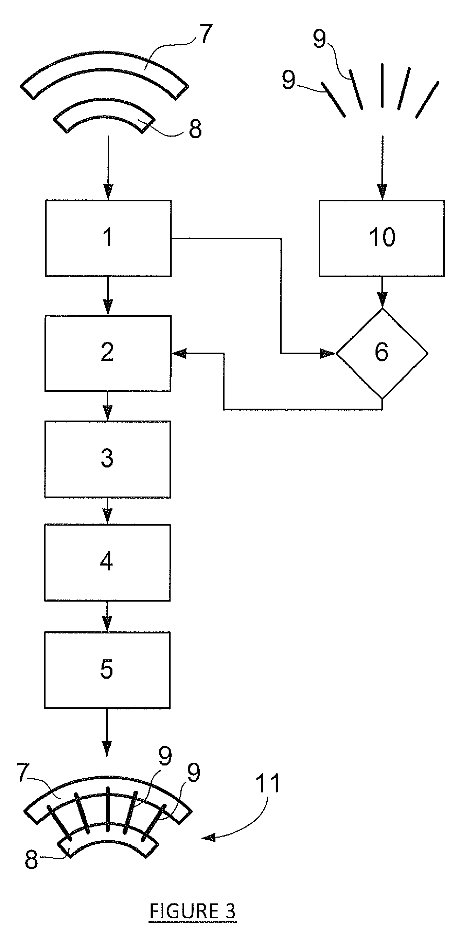

Un troisième mode de mise en oeuvre de l'invention est décrit en référence à la figure 3. Les références utilisées pour décrire les étapes de la figure 3 sont les mêmes que celles déjà utilisées pour décrire les étapes de la figure 1, pour simplifier la description. D'ailleurs, l'ensemble de la description du mode de mise en oeuvre de la figure 1 n'est pas reprise, cette description s'appliquant aux éléments de la figure 3 lorsqu'il n'y a pas d'incompatibilités. Seules les différences notables, structurelles et fonctionnelles, sont décrites.

En référence à la figure 3, dans le troisième mode de mise en oeuvre de l'invention, les aubes 9, issues de l'étape de fabrication 10, sont mises en place sur le moule des secteurs de plateforme 7, 8 préalablement à l'injection du mélange de la poudre métallique et du liant préparé préalablement (étape 1 de la figure 3). Lors de la mise en place des aubes finies, une extrémité des aubes est insérée dans le moule de la plateforme extérieure et une autre extrémité est insérée dans le moule de la plateforme intérieure (étape 6 de la figure 3).

Le mélange pâteux de poudre métallique et de liant est injecté dans le moule (étape 2 de la figure 3) et vient enrober les extrémités des aubes 9 qui dépassent dans les moules. Le contact entre les plateformes 7, 8 et les aubes 9 est alors assuré, les plateformes 7, 8 sous forme pâteuse venant épouser la forme des extrémités des aubes 9. Les aubes 9 et les plateformes 7, 8 sont alors assemblées dans leur position définitive.

Dans ce mode de mise en oeuvre, chaque moule comporte une empreinte dépourvue d'inserts. En effet, étant donné que la liaison entre les aubes 9 et les plateformes 7, 8 est réalisée directement, il n'est pas nécessaire de former des logements dans les plateformes 7, 8 pour l'assemblage des aubes 9.

Pour chaque moule, on obtient une ébauche dite « crue » que l'on extrait du moule après refroidissement et solidification du liant thermoplastique (étape 3 de la figure 1), les ébauches crues 7, 8 étant reliées mécaniquement entre elles par les aubes finies 9. Les aubes 9 et les secteurs de plateforme 7, 8 sont ensuite déliantés (étape 4 de la figure 3) puis frittés (étape 5 de la figure 3).

Grâce à ce troisième mode de mise en oeuvre, les aubes 9 sont liées de manière interne et intime avec les plateformes 7, 8 ce qui garantit une liaison de qualité.

## Revendications

1. Procédé de fabrication d'un ensemble (11) comprenant une pluralité d'aubes (9) montées dans une plateforme (7, 8), procédé dans lequel :
- on fabrique les aubes (9) séparément de la plateforme (7, 8), les aubes (9) après fabrication étant finies ;
- on prépare un mélange de poudre métallique et de liant thermoplastique ;
- on injecte le mélange dans un moule pour obtenir une ébauche de plateforme (7, 8) ;
- on réalise une opération de déliantage de l'ébauche de plateforme (7, 8) préalablement à l'assemblage des aubes finies (9) avec ladite ébauche (7, 8) ;
- on insère une extrémité des aubes finies (9) dans un logement ménagé dans l'ébauche de plateforme (7, 8) afin d'assembler l'ensemble (11) ; et
- on fritte l'assemblage de l'ébauche de plateforme (7, 8) avec les aubes finies (9) pour associer l'ensemble (11).

2. Procédé selon la revendication 1, dans lequel l'ensemble (11) comprend une pluralité d'aubes finies (9) dont les extrémités sont montées entre une plateforme intérieure (8) et une plateforme extérieure (7), procédé dans lequel on associe les extrémités des aubes finies (9) avec les ébauches de plateforme (7, 8) par frittage de la poudre métallique.

## Patentansprüche

1. Verfahren zur Herstellung einer Anordnung (11), die mehrere Schaufeln (9) umfasst, die in einer Plattform (7, 8) angebracht sind, wobei in dem Verfahren:
- die Schaufeln (9) getrennt von der Plattform (7, 8) hergestellt werden, wobei die Schaufeln (9) nach der Herstellung fertig gestellt werden;
- eine Mischung aus einem Metallpulver und einem thermoplastischen Bindemittel zubereitet wird;
- die Mischung in eine Form eingespritzt wird, um den Rohling der Plattform (7, 8) zu erhalten;
- eine Operation zum Ablösen des Rohlings aus der Plattform (7, 8) vor der Montage der fertigen Schaufeln (9) an dem Rohling (7, 8) ausgeführt wird;
- ein Ende der fertigen Schaufeln (9) in ein Gehäuse eingesetzt wird, das in dem Rohling der Plattform (7, 8) ausgebildet ist, um die Anordnung (11) zu montieren; und
- die Anordnung des Rohlings der Plattform (7, 8) mit den fertigen Schaufeln (9) gesintert wird, um die Anordnung (11) zusammenzufügen.

2. Verfahren nach Anspruch 1, wobei die Anordnung (11) mehrere fertige Schaufeln (9) aufweist, deren Enden zwischen einer inneren Plattform (8) und einer äußeren Plattform (7) angebracht sind, wobei in dem Verfahren Enden der fertigen Schaufeln (9) mit Rohlingen der Plattform (7, 8) durch Sintern des Metallpulvers zusammengefügt werden.

## Claims

1. A method of manufacturing an assembly comprising a plurality of blades mounted in a platform, in which method:
- the blades are manufactured separately from the platform, the blades after manufacture being finished;
- a mixture of metal powder and thermoplastic binder is prepared;
- the mixture is injected into a mold to obtain a platform blank;
- an operation of removing the binder from the platform blank is performed prior to assembling the finished blades with said blank;
- one end of the finished blades is inserted into a housing formed in the platform blank in order to assemble the assembly; and
- the assembly comprising the platform blank and the finished blades is sintered to unify the assembly.

2. The method as claimed in claim 1, in which the assembly comprises a plurality of finished blades the ends of which are mounted between an inner platform and an outer platform, in which method the ends of the finished blades are unified with the platform blanks by sintering the metal powder.
